Europäisches Patentamt

European Patent Office

Office européen des brevets

(19)

(11) Numéro de publication: **0 094 851**
**A1**

(12) **DEMANDE DE BREVET EUROPEEN**

(21) Numéro de dépôt: **83400761.9**

(22) Date de dépôt: **18.04.83**

(51) Int. Cl.³: **H 04 N 5/21**

(30) Priorité: **27.04.82 FR 8207252**

(43) Date de publication de la demande:
**23.11.83 Bulletin 83/47**

(84) Etats contractants désignés:
**AT BE CH DE GB IT LI LU NL SE**

(71) Demandeur: **THOMSON-CSF**
**173, Boulevard Haussmann**
**F-75379 Paris Cedex 08(FR)**

(72) Inventeur: **Eouzan, Jean-Yves**
**THOMSON-CSF SCPI 173, bld Haussmann**
**F-75379 Paris Cedex 08(FR)**

(72) Inventeur: **Heuze, Philippe**
**THOMSON-CSF SCPI 173, bld Haussmann**
**F-75379 Paris Cedex 08(FR)**

(74) Mandataire: **Courtellemont, Alain et al,**
**THOMSON-CSF SCPI 173, Bld Haussmann**
**F-75379 Paris Cedex 08(FR)**

(54) **Dispositif de correction des signaux de prises de vues de télévision.**

(57) Le dispositif est destiné à la correction des signaux délivrés par le capteur d'une caméra de prise de vues de télévision.

Pour chaque élément photosensible du capteur (1), le signal corrigé, E, est déduit du signal S produit par cet élément photosensible grâce à la formule $E = (S - S1) \frac{K}{S2-S1}$ (S1 signal relatif au courant d'obscurité, obtenu lorsque l'objectif de la caméra est obturé, S2 signal relatif à un éclairement uniforme prédéterminé et K constante prédéterminée qui est la même pour tous les éléments photosensibles du capteur). Le dispositif comporte une voie purement analogique par où les signaux du capteur (1) sont dirigés vers les circuits d'utilisation; dans cette voie sont disposés en série un soustracteur analogique (20) suivi d'un multiplicateur analogique (21). Pendant une phase d'acquisition un convertisseur analogique numérique (5), dont l'entrée est couplée à un point situé en amont du soustracteur, fournit sous forme numérique les signaux S1 et S2. Des mémoires (12, 13) couplées au convertisseur stockent les signaux S1 et $\frac{K}{S2-S1}$ et, dans la phase de correction, les délivrent, à travers des convertisseurs numériques-analogique (18, 19), respectivement au soustracteur (20) et au multiplicateur (21).

Application aux caméras de prises de vues de télévision.

EP 0 094 851 A1

Croydon Printing Company Ltd.

Fig.1

1

## Dispositif de correction des signaux de prises
## de vues de télévision

La présente invention se rapporte à un dispositif pour la correction de certains types de défauts inhérents aux prises de vues avec une caméra de télévision, c'est-à-dire aux signaux fournis par les éléments photosensibles du capteur d'une caméra lors d'une analyse par points successifs et ligne par ligne d'une image obtenue avec l'objectif de la caméra.

Différents défauts peuvent perturber les signaux fournis par le capteur d'une caméra de télévision lors des prises de vues : défauts dus aux caractéristiques de l'optique, défauts dus à la non uniformité de l'éclairage en pluie quand un tel éclairage est utilisé, défauts de non uniformité du niveau des noirs et de la sensibilité...

Il est connu de corriger ces défauts par le procédé dont la description suit.

L'expérience montre que le signal fourni par un capteur d'une caméra de télévision et correspondant à un point de la trame, c'est à dire à un point de la mosaïque d'analyse, peut se mettre sous la forme :

$$S = A + B.E1 + B.E$$

où, au point considéré du capteur, A représente le courant d'obscurité, B la sensibilité du capteur, E1 (quand il existe) l'éclairement en pluie reçu, E le flux lumineux reçu de la scène à observer.

Le signal S peut être décomposé en deux signaux : un signal $S1 = A + B.E1$ et un signal B.E . Le signal S1, qui se réduit au courant d'obscurité A en l'absence d'utilisation d'un éclairage en pluie, est un signal qui peut être considéré comme constant au cours d'une prise de vues dans la mesure où la température du capteur reste stable ; en effet l'expérience montre qu'il ne varie que peu avec le temps, du moins avec un matériel de qualité.

Le signal S1, qui est une fonction du niveau des noirs et de la sensibilité lorsqu'il y a de l'éclairage en pluie, peut être déterminé facilement en obturant l'objectif de la caméra de télévision.

Connaissant le signal Sl, la sensibilité B du capteur en un point quelconque de la mosaïque peut être déterminée à un coefficient multiplicatif près qui sera le même pour tous les points de la mosaïque ; en effet si, l'objectif étant ouvert, une scène à éclairement uniforme est observée, le signal S prend la valeur S2 = Sl + B.E2 où E2 représente l'éclairement uniforme ; connaissant ainsi Sl et S2 on en déduit $B = \frac{S2 - Sl}{E2}$.

La détermination de Sl et B pour tous les points de la mosaïque se fera avant de procéder à une prise de vues et constituera ce qui peut s'appeler la phase d'acquisition.

Lors d'une prise de vues un signal S est obtenu pour chacun des points de la mosaïque

$$S = A + B.El + B.E = Sl + B.E$$

il est donc possible, connaissant Sl et B, de déduire du signal S le signal $E = \frac{S - Sl}{B}$ c'est-à-dire le signal S corrigé des défauts mentionnés plus avant ; pour cela le signal Sl est retranché du signal S et le signal résultant est divisé par le coefficient $B = \frac{S2 - Sl}{E2}$ ou multiplié par l'inverse de B.

Parmi les dispositifs connus pour la mise en oeuvre du procédé décrit ci-avant, il en est un (brevet GB-A-1 526 801) qui comporte un traitement purement numérique du signal : les signaux venant du capteur sont convertis en signaux numériques, puis Sl et 1/B ou des signaux équivalents sont stockés sous forme numérique, puis la correction est effectuée sur les signaux numériques et les signaux corrigés sont convertis en signaux analogiques ; un tel dispositif amène une imprécision importante due au fait que la correction d'un signal nécessite une conversion, en temps réel, en numérique du signal à corriger, suivie d'une conversion, en temps réel, en analogique du signal corrigé. Un autre dispositif connu (brevet US-A-4 032 975) effectue le traitement en faisant suivre au signal à corriger une voie purement analogique : deux circuits de traitement sont branchés en parallèle sur deux tronçons successifs de cette voie pour stocker respectivement le signal Sl sous forme analogique et le signal $\frac{1}{B}$ sous forme numérique ; ce dispositif présente l'inconvénient d'avoir un signal Sl qui, du fait qu'il est stocké sous forme analogique, se dégrade avec le temps - en supposant qu'il ait été possible de stocker le signal Sl sous forme numérique cela aurait nécessité un convertisseur numérique analogique dont les imprécisions seraient venues s'ajouter à celles dues au convertisseur numérique analogique nécessaire pour le stockage de $\frac{1}{B}$.

La présente invention a pour but d'éviter les inconvénients précités. Ceci est obtenu en faisant suivre au signal à traiter une voie purement analogique et en déterminant les signaux de correction par un circuit numérique, à partir des signaux de sortie d'un seul convertisseur analogique-numérique.

Selon l'invention un dispositif de correction des signaux fournis par le capteur d'une caméra de télévision, comportant des moyens de mise en mémoire et de traitement pour, dans une phase d'acquisition, recevoir de chaque élément photosensible du capteur, des signaux S1 et S2 fournis respectivement lorsque l'objectif est obturé et lorsqu'une scene à éclairement uniforme est filmée et pour délivrer des signaux de correction de la forme S1 et $\frac{K}{S2-S1} = \frac{1}{B}$ où K est une constante prédéterminée identique pour tous les éléments du capteur et où les valeurs S1 et S2 sont relatives au même élément photosensible, est caractérisé en ce que les moyens comportent :

- un circuit de conversion analogique-numérique pour recevoir les signaux du capteur,

- des moyens de calcul numérique couplés à la sortie du circuit de conversion, pour élaborer le signal $\frac{1}{B}$,

- des circuits de mémoire couplés à la sortie du circuit de conversion, pour stocker les signaux    S1 et $\frac{1}{B}$,

- des moyens de calcul analogique comportant un soustracteur analogique ayant une première entrée pour recevoir les signaux du capteur et une seconde entrée couplée aux circuits de mémoire pour recevoir, sous forme analogique le signal S1, et un multiplicateur analogique ayant une première entrée couplée à la sortie du soustracteur et une seconde entrée couplée aux circuits de mémoire pour recevoir, sous forme analogique, le signal $\frac{1}{B}$, et une sortie pour fournir un signal corrigé.

La présente invention sera mieux comprise et d'autres caractéristiques apparaîtront à l'aide de la description ci-après et des figures s'y rapportant qui représentent :

- la figure 1, un dispositif de correction selon l'invention,

4

- la figure 2, un organigramme relatif au dispositif selon la figure 1.

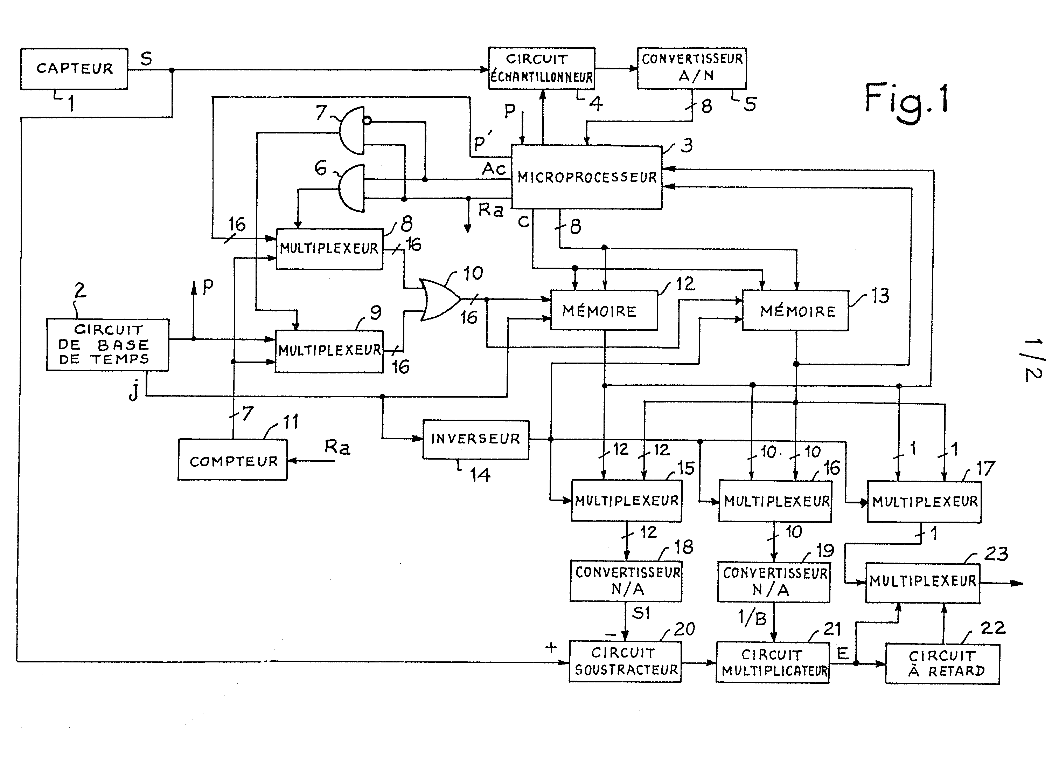

La figure 1 montre un dispositif de correction pour la correction des signaux fournis par un capteur, 1, d'une caméra de télévision dont les signaux de commande sont fournis par un circuit de base de temps 2.Dans l'exemple décrit le capteur 2 est un capteur à dispositifs à couplage de charge, qui se présente sous la forme d'une mosaïque, mais, à quelques adaptations près, à la portée de l'homme de l'art, le circuit selon la figure 1 est utilisable avec un capteur selon la technologie à tube.

Les liaisons entre le circuit de base de temps 2 et le capteur 1 n'ont pas été représentées pour ne pas surcharger la figure et parce qu'elles font partie de la caméra telle qu'elle existe sans le dispositif de correction. De même, sur la figure 1, les dispositifs de synchronisation relevant de la technologie courante, n'ont pas été représentés en vue de rendre le dessin plus clair et de simplifier l'exposé.

Le capteur 1 fournit les signaux S dont il a été question dans la description ci-avant du procédé de correction selon l'invention. Ces signaux sont échantillonnés dans un circuit d'échantillonneur 4 dont le signal qu'il élabore n'est disponible en sortie que sous la commande d'un microprocesseur, 3, de type 6800. Ce microprocesseur reçoit du circuit de base de temps l'adresse, p, du point courant c'est-à-dire du point de la trame dont le signal apparaît à la sortie du capteur 1.

Le signal de sortie du circuit échantillonneur 4 est envoyé à un convertisseur analogique-numérique, 5, qui comporte 8 sorties reliées au microprocesseur 3 pour fournir séquentiellement à celui-ci, après deux ordres d'entrée-sortie, une information numérique de 12 bits (8 bits + 4 bits), représentative de la valeur du signal du point courant.

Dans la phase d'acquisition dont il a été question lors de la description du procédé selon l'invention, l'objectif de la caméra est d'abord obturé et les signaux fournis par le capteur sont mis en mémoire pour chaque point de la mosaïque. A cette fin les signaux S1 que reçoit alors le microprocesseur 3 du convertisseur analogique-numérique 5 sont envoyés dans deux mémoires composées chacune de 24 boîtiers de mémoires dynamiques de 64 k.bits (RAM dans la littérature anglo-saxonne), nécessitant une lecture ou un "rafraichissement" (refresh dans la littérature anglo-saxonne) au moins toutes les 2 mS pour ne pas perdre leur contenu. L'adressage à l'une ou l'autre des deux mémoires se fait en fonction de la parité de la trame considérée grâce au signal de parité de trame, j ; ce signal est fourni, par le circuit de base de temps 2, directement à la mémoire 12 qui stocke les informations relatives aux points des trames paires ; le signal j est fourni, à travers un inverseur 14, à la mémoire 13 qui stocke les informations relatives aux points des trames impaires.

Un signal C d'écriture-lecture, fourni par le microprocesseur 3, commande l'écriture ou la lecture dans les mémoires 12, 13.

A chaque point de la mosaïque correspond, dans l'une des mémoires 12, 13, une zone de stockage d'information comportant une série de 24 emplacements d'une contenance de 1 bit chacun. Les 12 premiers bits sont destinés au stockage de l'information S1 ; les bits du $13^e$ au $23^e$, sont destinés au stockage de la valeur $\frac{1}{B}$ (où B est le coefficient défini ci-avant dans la description du procédé selon l'invention); le $24^e$ bit, comme il apparaîtra dans la suite de la description, est destiné à donner une information sur la qualité de l'information à attendre relativement au point de la mosaïque considéré en fonction des valeurs relevées pendant la phase d'acquisition.

Toujours dans la phase d'acquisition, après que les informations S1 relatives à tous les points aient été mises en mémoire, les coefficients $\frac{1}{B} = \frac{E2}{S2 - S1}$ doivent être déterminés. Dans cette formule tirée de la valeur $B = \frac{S2 - S1}{E2}$ établie plus avant, la valeur $\frac{1}{B}$ est fonction de S1 qui vient d'être mis en mémoire, de S2 et de E2 où S2 est, pour chaque point, le signal fourni par la mosaïque en fonction d'un éclairement E2 aussi uniforme que possible pour tous les points. Pour obtenir S2, l'objectif étant ouvert sur une valeur de diaphragme quelconque, une scène à éclairement uniforme sert d'élément d'observation ; le diaphragme est alors réglé de manière que le signal de sortie du capteur 1 ait une valeur moyenne, sur l'ensemble des points, de $E2 = \frac{Vs + Vo}{2}$ , où Vs est la tension moyenne de saturation des éléments photosensibles du circuit à couplage de charge du capteur 1 et Vo la tension moyenne mesurée pour le courant d'obscurité.

Dans cette partie de la phase d'acquisition le microprocesseur, 3, reçoit les signaux S2 sous forme numérique du convertisseur analogique-numérique 5. Par le signal p d'adresse du point courant fourni par le circuit 2, le microprocesseur 1 connaît la position, dans celle des mémoires 12, 13 désignée par le signal j de parité de trame, du signal S1 correspondant au point dont il reçoit le signal S2 ; le microprocesseur peut donc lire ce signal S1 et, grâce à sa propre mémoire programme, effectuer le calcul de $\frac{1}{B} = \frac{Vs + Vo}{(S2-S1)}$ ou plus exactement de $\frac{1}{B} = \frac{K}{S2 - S1}$ où K est un coefficient prédéterminé dont la valeur est la même pour tous les points. Le calcul est effectué sur les 12 bits des signaux S1 et S2 mais seuls les 10 bits de poids fort du résultat obtenu sont stockés dans les mémoires 12 et 13.

Dans le $24^e$ emplacement de la zone de stockage d'information, est envoyé par le microprocesseur 3 un bit 1 si, pour les signaux S1 et S2 relatifs au point considéré, on a L 1/B M; les valeurs L et M sont déterminées au vu des résultats relatifs à l'éclairement uniforme et sont les mêmes quel que soit le point considéré. Si 1/B n'est pas compris entre L et M il est estimé que le capteur 1 présente un défaut au point considéré. Ce défaut est noté par un bit 0 dans le $24^e$ emplacement de la zone de stockage. Les raisons de ce défaut ponctuel du capteur peuvent être diverses : fibre optique cassée, fort courant d'obscurité, court-circuit, élément photosensible défectueux, liaison coupée...

Lorsque la phase d'acquisition est terminée, c'est-à-dire que la totalité des informations "S1, 1/B et défaut éventuel" (en abrégé "S1-1/B-d" dans ce qui suit) est stockée dans les mémoires 12, 13, une scène quelconque peut être filmée par la caméra de télévision et les signaux S fournis par le capteur peuvent être corrigés.

Pour effectuer la correction proprement dite, le signal S du point courant, fourni par le capteur 1, est envoyé sur l'entrée "+" d'un circuit soustracteur 20. Sous la commande du circuit de base de temps 2, qui en fournit l'adresse, l'information "S1-1/B-d" relative à ce point courant, est lue dans celle des mémoires 12, 13 qui la contient ; la mémoire où se trouve l'information en question est désignée par la valeur du signal de parité de trame, j, qui, comme il a été indiqué précédemment, arrive directement sur la mémoire 12 et à travers l'inverseur 14 sur la mémoire 13.

L'information "S1-1/B-d" est envoyée des mémoires 12, 13 vers trois multiplexeurs 15, 16, 17 dont les connexions internes sont commandées par le signal de sortie de l'inverseur 14 c'est-à-dire par l'inverse, $\bar{j}$, du signal de parité de trame. Quand le signal $\bar{j}$ a la valeur 0 ce sont les signaux venant de la mémoire 12 qui traversent les multiplexeurs 15, 16, 17, et quand $\bar{j}$ = 1 ce sont les signaux venant de la mémoire 13. Les 23 bits de l'information "S1 -1/B-d" sont dirigés, pour les 12 premiers (information S1) vers le multiplexeur 15, pour les 10 suivants (information 1/B) vers le multiplexeur 16 et pour le dernier (information d de défaut éventuel) vers le multiplexeur 17.

Les sorties des multiplexeurs 15, 16 sont respectivement réunies aux entrées de deux convertisseurs numériques-analogiques 18, 19 qui délivrent donc, sous forme analogique, les signaux S1 et $\frac{1}{B}$ relatifs au point courant dont le signal S est appliqué sur l'entrée "+" du circuit soustracteur 20.

Le signal analogique S1 du convertisseur 18 est appliqué à l'entrée "-" du circuit soustracteur 20. Le signal S-S1 de sortie du circuit 20 est appliqué à l'une des entrées d'un circuit multiplicateur 21 qui reçoit sur son autre entrée le signal analogique 1/B fourni par le convertisseur 19 ; ce circuit multiplicateur 21 donne donc sur sa sortie le signal $(S-S1).\frac{1}{B} = E$ qui est le signal corrigé recherché.

Le signal corrigé E est envoyé d'une part sur l'entrée d'un circuit à retard 22 et d'autre part sur la première entrée d'un multiplexeur 23, qui reçoit sur sa seconde entrée le signal de sortie du circuit à retard 22. Le retard du circuit à retard 22 est égal au décalage dans le temps de deux points successifs d'une même ligne dans une trame d'analyse. Le signal de commande d'aiguillage du multiplexeur 23 est constitué par le signal de sortie du multiplexeur 17, c'est-à-dire par le signal, d, de défaut éventuel du capteur 1 relativement au point courant dont le signal corrigé apparaît à la sortie du circuit multiplicateur 21. Ainsi lorsque d a la valeur 1, c'est-à-dire lorsque aucun défaut n'a été constaté dans la phase d'acquisition pour le point courant considéré, le multiplexeur transmet le signal

$E = \dfrac{S-S1}{B}$ de ce point courant. Par contre, lorsque d a la valeur 0, c'est le signal E du point précédant le point courant considéré qui est transmis.

Ainsi le signal fourni par le multiplexeur 23 correspond bien au signal S corrigé tel qu'il était prévu de l'obtenir dans le procédé de correction décrit au début de ce texte.

Dans l'exposé ci-avant la commande des mémoires 12, 13 par le microprocesseur 3 n'a été décrite que par les résultats obtenus ; les moyens mis en oeuvre pour effectuer cette commande vont être décrits ci-après.

Il est à rappeler tout d'abord que les mémoires 12 et 13 nécessitent un "rafraichissement" de leur contenu au moins toutes les 2 mS. Il est nécessaire de procéder à un tel rafraichissement dans deux cas : d'une part, pendant la phase d'acquisition, lorsque le microprocesseur 3 effectue des calculs et d'autre part, pendant que les corrections sont effectuées, lors des intervalles de suppression trame.

Pour fournir aux mémoires 12 et 13 l'adresse, p', où doit être effectuée une écriture ou une lecture, le dispositif de correction selon la figure 1 comporte deux multiplexeurs 8, 9, de type 74 LS 257. Un signal d'acquisition, Ac, fourni par le microprocesseur, indique lorsqu'il a la valeur 1 qu'une phase d'acquisition est en cours, et lorsqu'il a la valeur 0 qu'une correction peut être effectuée. Le signal d'acquisition est appliqué sur la première entrée de deux portes ET, 6 et 7 ; la première entrée de la porte 7 est une entrée avec inverseur et la porte ET 7 n'est donc passante que lorsque la phase d'acquisition est terminée. Sur la seconde entrée des portes ET 6 et 7 est appliqué un signal de commande de "rafraichissement", Ra, qui est élaboré par le microprocesseur 3 d'après les critères indiqués au paragraphe précédent.

Les signaux de sortie des portes ET 6 et 7 constituent respectivement les signaux de commande des multiplexeurs 8 et 9. Ces multiplexeurs reçoivent, respectivement, sur leurs premières entrées l'adresse, p', indiquée par le microprocesseur 3 et l'adresse, p, du point courant indiquée par le circuit de base de temps, 2 ; ils reçoivent, sur leur secondes entrées, le signal de rafraichissement délivré par un compteur 11 qui fournit 128 impulsions successives à une fréquence de 2 MHz et qui ne fonctionne que lorsque le signal de rafraichissement, Ra, a la valeur 1.

Les sorties des multiplexeurs 8, 9 sont reliées à travers un circuit OU, 10, aux entrées d'adressage des mémoires 12, 13.

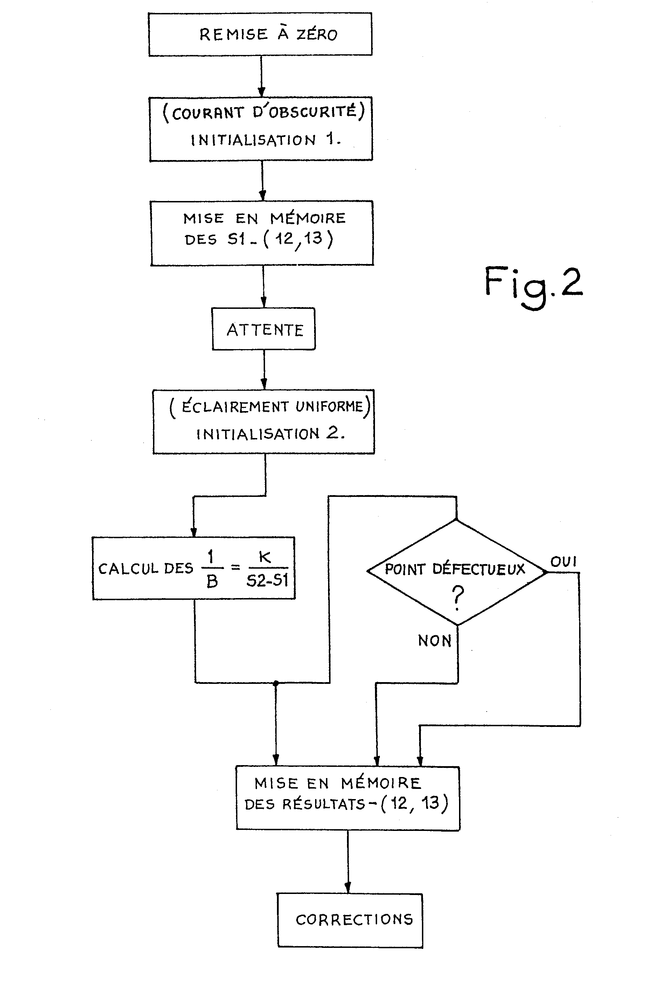

Le programme du microprocesseur 3 de la figure 1, dans le cadre du fonctionnement du dispositif de correction, est illustré sur la figure 2 et est commenté ci-après en faisant référence aux circuits de la figure 1.

A la mise sous tension du dispositif le microprocesseur 3 effectue une remise à zéro du contenu des mémoires 12, 13. Puis le microprocesseur est sollicité (Initialisation 1) par un signal qui lui indique que l'objectif de la caméra est obstrué et qu'une phase d'acquisition doit commencer. Une mise en mémoire (mémoires 12, 13) de la valeur S1 de la tension d'obscurité pour chacun des points de la mosaïque du capteur est alors effectuée.

Quand la mise en mémoire de la totalité des valeurs S1 est effectuée, le processus d'acquisition est suspendu (mise en attente) afin de permettre d'enlever le cache qui obstruait l'objectif de la caméra et de placer devant cet objectif une scène à éclairement uniforme réglé de manière que les éléments photosensibles du capteur 1 fournissent une tension qui, sur l'ensemble de ces éléments photosensibles, soit égale à $\frac{Vs + Vo}{2}$ (Vs et Vo tension moyenne de saturation et tension moyenne d'obscurité pour les éléments photosensibles). Quand ces opérations sont terminées le microprocesseur 3 est à nouveau sollicité (Initialisation 2) par un signal qui lui indique que la phase d'acquisition peut être poursuivie plus avant.

Il est alors procédé au calcul, pour chacun des éléments photosensibles du capteur, de la valeur $\frac{1}{B} = \frac{K}{S2-S1}$ (K constante prédéterminée, S1 tension d'obscurité relative à chaque élément photosensible et contenue dans les mémoires 12, 13 et S2 tension fournie par chaque élément photosensible pour la scène à éclairement uniforme). Ces valeurs $\frac{1}{B}$ sont mises en mémoire (mémoires 12, 13) au fur et à mesure qu'elles sont obtenues. Il est à noter que le calcul de $\frac{1}{B}$ est relativement long, en particulier du fait que S1 doit, à chaque fois, être extrait des mémoires 12, 13 ; il en résulte que le calcul de la totalité des valeurs $\frac{1}{B}$ s'effectue sur plusieurs trames successives.

Après le calcul des valeurs $\frac{1}{B}$ il est procédé au contrôle des éléments photosensibles (Point défectueux ?) : si les mesures effectuées pour un élément photosensible ne donnent pas $L < 1/B < M$ (L et M valeurs prédéterminées) cet élément est considéré comme défectueux. Cette information de défaut éventuel est également mise en mémoire (mémoires 12, 13) au fur et à mesure qu'elle est obtenue.

Quand la totalité des informations $\frac{1}{B}$ et "défaut éventuel" est mise en mémoire le dispositif est prêt à effectuer une correction des signaux de prise de vues de la caméra.

La présente invention est susceptible de diverses variantes au dispositif décrit ci-avant. C'est ainsi que, par exemple, la valeur S1 mise en mémoire peut être une valeur moyenne obtenue à partir des valeurs mesurées, pour le même élément photosensible, sur plusieurs trames. La valeur S2 qui, avec S1, sert au calcul de $\frac{1}{B}$ peut être obtenue de la même manière. Il est également possible d'envisager de tenir compte de l'évolution de certains paramètres (température ambiante, degré hygrométrique de l'atmosphère, distance focale de zoom, ouverture du diaphragme...) par exemple au moyen de coefficients multiplicateurs rectificatifs appliqués aux valeurs S1 et $\frac{1}{B}$ fournies, sous forme analogique, par les convertisseurs numériques-analogiques 18, 19.

11

## REVENDICATIONS

1. Dispositif de correction des signaux fournis par le capteur d'une caméra de télévision, comportant des moyens de mise en mémoire et de traitement pour, dans une phase d'acquisition, recevoir de chaque élément photosensible du capteur, des signaux S1 et S2 fournis respectivement lorsque l'objectif est obturé et lorsqu'une scène à éclairement uniforme est filmée et pour délivrer des signaux de correction de la forme S1 et $\frac{K}{S2-S1} = \frac{1}{B}$ où K est une constante prédéterminée identique pour tous les éléments du capteur et où les valeurs S1 et S2 sont relatives au même élément photosensible, caractérisé en ce que les moyens comportent :

- un circuit de conversion analogique-numérique (4,5) pour recevoir les signaux du capteur (1)

- des moyens de calcul numérique (3) couplés à la sortie du circuit de conversion, pour élaborer le signal $\frac{1}{B}$,

- des circuits de mémoire (12, 13) couplés à la sortie du circuit de conversion, pour stocker les signaux S1 et $\frac{1}{B}$,

- des moyens de calcul analogique comportant un soustracteur analogique (20) ayant une première entrée pour recevoir les signaux du capteur et une seconde entrée couplée aux circuits de mémoire pour recevoir, sous forme analogique le signal S1, et un multiplicateur analogique (21) ayant une première entrée couplée à la sortie du soustracteur et une seconde entrée couplée aux circuits de mémoire pour recevoir, sous forme analogique, le signal $\frac{1}{B}$, et une sortie pour fournir un signal corrigé (E).

2. Dispositif de correction selon la revendication 1, caractérisé en ce que les moyens de calcul numérique (3) sont conçus pour vérifier que $L < \frac{1}{B} < M$ (où L et M sont des valeurs prédéterminées) et fournir aux circuits de mémoire (12, 13) un signal à stocker dont la valeur est fonction du résultat de la vérification et en ce qu'il comporte un circuit d'aiguillage (22, 23) ayant une entrée de commande d'aiguillage couplée aux

12

circuits de mémoire, une première entrée de signal reliée à la sortie du multiplicateur analogique (21), une seconde entrée de signal couplée à la sortie du multiplicateur analogique par un circuit à retard (22), de temps de retard égal au décalage dans le temps de deux signaux successifs d'une même ligne d'analyse et une sortie pour fournir un signal qui est le signal de sa premiere entrée quand $L < \frac{1}{B} < M$ et le signal de sa seconde entrée dans le cas contraire.

Fig.1

1/2

0094851

Fig.2

```
┌─────────────────────┐
│   REMISE À ZÉRO      │
└──────────┬──────────┘
           ↓
┌─────────────────────┐
│ (COURANT D'OBSCURITÉ)│
│  INITIALISATION 1.   │
└──────────┬──────────┘
           ↓
┌─────────────────────┐
│  MISE EN MÉMOIRE     │
│  DES S1 - (12,13)    │
└──────────┬──────────┘
           ↓
     ┌───────────┐
     │  ATTENTE  │
     └─────┬─────┘
           ↓
┌─────────────────────┐
│(ÉCLAIREMENT UNIFORME)│
│  INITIALISATION 2.   │
└──────────┬──────────┘
```

CALCUL DES $\dfrac{1}{B} = \dfrac{K}{S2-S1}$

POINT DÉFECTUEUX ? OUI / NON

MISE EN MÉMOIRE DES RÉSULTATS - (12, 13)

CORRECTIONS

0094851

**Office européen des brevets**

# RAPPORT DE RECHERCHE EUROPEENNE

Numéro de la demande

EP 83 40 0761

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X,Y | US-A-4 240 103 (POETSCH) <br> * Colonne 3, ligne 17 - colonne 4, ligne 22 * | 1,2 | H 04 N 5/21 |
| | --- | | |
| X,Y | EP-A-0 024 470 (BALL CORPORATION) <br> * Page 40, ligne 19 - page 41, ligne 6; page 42, ligne 26 - page 43, ligne 15 * | 1,2 | |
| | --- | | |
| Y | GB-A-2 013 064 (TOKYO SHIBAURA) <br> * Page 1, lignes 58-92 * | 2 | |
| | --- | | |
| A,D | US-A-4 032 975 (MALUEG) | | |
| | --- | | |
| A,D | GB-A-1 526 801 (BBC) | | |
| | ----- | | |

**DOMAINES TECHNIQUES RECHERCHES (Int. Cl. ³)**

H 04 N 5

Le présent rapport de recherche a été établi pour toutes les revendications

| Lieu de la recherche | Date d'achèvement de la recherche | Examinateur |
|---|---|---|
| LA HAYE | 23-08-1983 | CRISTOL Y. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82